# EUROPÄISCHE PATENTSCHRIFT

(11) **EP 2 670 581 B1**
(45) Veröffentlichungstag und Bekanntmachung des Hinweises auf die Patenterteilung: **20.07.2016**
(21) Anmeldenummer: 12700614.6
(22) Anmeldetag: 18.01.2012
(51) Int. Cl.: B29C 70/08, B29C 70/20, B29L 31/08, B29C 70/18

(54) **VERFAHREN, HALBZEUG FÜR DIE HERSTELLUNG EINES FASERVERSTÄRKTEN BAUTEILS EINER WINDENERGIEANLAGE UND VERWENDUNG DES HALBZEUGES**
METHOD, SEMI-FINISHED PRODUCT FOR THE PRODUCTION OF A FIBRE-REINFORCED COMPONENT OF A WIND ENERGY PLANT AND USE OF THE SEMI-FINISHED PRODUCT
PROCÉDÉ, SEMI-PRODUIT POUR LA PRODUCTION D'UN COMPOSANT RENFORCÉ PAR DES FIBRES D'UNE ÉOLIENNE ET UTILISATION DU SEMI-PRODUIT

(30) Priorität: 03.02.2011 DE 102011003560
(43) Veröffentlichungstag der Anmeldung: 11.12.2013
(73) Patentinhaber: Senvion GmbH, 22297 Hamburg (DE)
(72) Erfinder: BENDEL, Urs, 24787 Fockbek (DE)
(74) Vertreter: Seemann & Partner
(86) Internationale Anmeldenummer: PCT/EP2012/000204
(87) Internationale Veröffentlichungsnummer: WO 2012/104022

(56) Entgegenhaltungen:
- WO-A1-98/46422
- DE-A1-102008 045 601
- FR-A1- 2 797 892
- US-A- 3 761 345

## Beschreibung

Die Erfindung betrifft ein Verfahren zum Herstellen eines Faserhalbzeugs für die Herstellung eines faserverstärkten Bauteils einer Windenergieanlage, insbesondere eines Gurts eines Rotorblatts einer Windenergieanlage.

Ferner betrifft die Erfindung ein Faserhalbzeug für die Herstellung eines faserverstärkten Bauteils einer Windenergieanlage, insbesondere Gurt eines Rotorblatts einer Windenergieanlage, sowie die Verwendung eines Faserhalbzeugs.

Es ist bekannt, dass Rotorblätter von Windenergieanlagen eine Schale aufweisen, wobei die Schale paarweise gegenüberliegend angeordnete Gurte aufweist, wobei zwischen den Gurten Stege vorgesehen sind, so dass der Profilquerschnitt der Schalen gegen Biegung in Schlagrichtung versteift ist. Insbesondere bestehen die Rotorblattgurte aus in Längsrichtung faserverstärkten Kunststoffen.

Die sehr leichte Schale derartiger Rotorblätter weist nur eine geringe Eigensteifigkeit auf und ist daher durch die anlaminierten Gurte verstärkt, die über die wesentliche Länge des Rotorblatts laufen und mit in Längsrichtung laufenden Fasern für die Aufnahme solcher Zug- und Druckkräfte ausgebildet sind.

Biegekräfte am Rotorblatt treten insbesondere durch Windbelastung in Schlagrichtung auf, also in Richtung senkrecht zur Umlaufebene des Blattes. Dabei verbiegt sich ein Rotorblatt an jeder Stelle bevorzugt in Richtung senkrecht zu seiner Profilsehne, also der Linie, die in einer quer zur Längserstreckung des Rotorblatts stehenden Querschnittsebene von der verrundeten Blattnase bis zum dünn auslaufenden hinteren Ende verläuft.

Ein Hauptgurt im Rotorblatt einer Windenergieanlage wird aus einer Vielzahl von Einzellagen aufgebaut, um insbesondere eine für das Rotorblatt notwendige Längssteifigkeit zu erreichen. Die notwendige Längssteifigkeit ergibt sich aus den Lasten, die auf das Rotorblatt wirken, und der Festigkeit des Materials oder dem Parameter des Turmfreigangs, also dem Abstand der Rotorblattspitze zur Turmaußenwand. Je nach Größe des Rotorblatts werden unterschiedlich viele Lagen eingelegt. So werden beispielsweise bei einem 50 m langen Rotorblatt ca. 70 bis 90 Lagen von Glasfaserverstärkungen verwendet.

Üblicherweise werden beim Bau der Hauptgurte von Rotorblättern faserverstärkte Einzellagen verwendet, die Verstärkungsfasern bzw. ein Gelege aus entsprechenden Fasern aufweisen.

Die Hauptgurte des Rotorblatts sind symmetrisch zur Profilsehne gegenüberliegend angeordnet und mit als längsverlaufende Wände ausgebildeten Stegen zwischen diesen Gurten ausgestützt. Sie bilden somit ein ausgesteiftes Tragprofilrohr hoher Biegesteifigkeit in Richtung quer zur Profilsehne des Rotorblatts. Außerdem können Nebengurte auch in der Profilnase und/oder der Profilhinterkante angeordnet sein.

Biegesteifigkeit in Schlagrichtung ist für Rotorblätter von wesentlicher Bedeutung. Dadurch wird unter anderem vermieden, dass ein Rotorblatt bei hoher Belastung gegen den Turm der Windenergieanlage schlagen kann. Ferner muss erreicht werden, dass die Biegesteifigkeit des Rotorblatts so hoch ist, dass die Eigenfrequenz des Rotorblatts, die im Wesentlichen proportional von der Steifigkeit und umgekehrt proportional von der Masse abhängt, bei im Betrieb auftretenden Drehzahlen des Rotors nicht angeregt wird.

Weiterhin ist bekannt, dass Rotorblätter üblicherweise Gurte mit Glasfaserverstärkung oder Kohlenfaserverstärkung aufweisen. Die Glasfaserverstärkung ist kostengünstig, hat jedoch eine geringe Steifigkeit und ein hohes Gewicht im Vergleich zu Kohlenfaserverstärkung.

Überdies ist im Stand der Technik bekannt, dass die faserverstärkten Gurte von Rotorblättern unter Verwendung von Harz-Infusionsverfahren hergestellt werden.

Darüber hinaus ist aus DE 100 13 409 C1 ein Verfahren zur Herstellung von faserverstärkten Kunststoff-Bauteilen aus trockenen Faserverbund-Halbzeugen mittels eines Injektionsverfahrens zur Injektion von Matrixmaterial bekannt. Weiterhin offenbart DE 602 16 108 C2 ein Verfahren zum Bilden von faserverstärkten Kunststoffstrukturen.

Weiterhin offenbart WO-A-2007/038930 ein Verfahren zum Herstellen eines faserverstärkten Produktes unter Verwendung des Harz-Infusionsverfahrens (RTM, Resin Transfer Molding).

Außerdem ist in US-A-3 761 345 allgemein eine mehrschichtige, nicht gewebte Struktur für verstärkendes Harzmaterial beschrieben.

US 3 761 345 offenbart ein Verfahren zum Herstellen eines Faserhalbzeugs , mit den folgenden Schritten:
a) es wird eine Grundschicht mit Rovingen bereitgestellt, wobei die Rovinge der Grundschicht keine 0°-Ausrichtung in Bezug auf die Längsachse des, insbesondere zu bildenden, Halbzeugs aufweisen, b) auf die Grundschicht werden Rovinge als zweite Schicht mit einer 0°-Ausrichtung in Bezug auf die Längsachse des, insbesondere zu bildenden, Faserhalbzeugs aufgebracht,
c) auf die zweite Schicht aus Rovingen mit 0°-Ausrichtung werden Rovinge mit keiner 0°- Ausrichtung in Bezug auf die Längsachse als dritte Schicht aufgebracht,
d) auf die dritte Schicht werden Kurzfasern verteilt,
e) wobei in einem nachfolgenden Schritt die zusammengestellten Schichten miteinander zu einem Halbzeug, insbesondere durch Nähen, verbunden werden.

Ausgehend von diesem Stand der Technik besteht die Aufgabe der vorliegenden Erfindung darin, ein Verfahren zur Herstellung eines faserverstärkten Bauteils einer Windenergieanlage, insbesondere eines Gurtes eines Rotorblatts, bzw. einen Gurt bereitzustellen, wobei es möglich sein soll, das Bauteil mit einer großen Dicke sicher und auf einfache Weise herzustellen.

Gelöst wird diese Aufgabe durch ein Verfahren zum Herstellen eines Faserhalbzeugs für die Herstellung eines faserverstärkten Bauteils einer Windenergieanlage, insbesondere eines Gurts eines Rotorblatts einer Windenergieanlage, mit den folgenden Schritten:
a) es wird eine Grundschicht mit Rovingen bereitgestellt, wobei die Rovinge der Grundschicht keine 0°-Ausrichtung in Bezug auf die Längsachse des zu bildenden Faserhalbzeugs aufweisen, oder es wird eine als Faservlies ausgebildete Grundschicht bereitgestellt,
b) auf die Grundschicht werden Rovinge als zweite Schicht mit einer 0°-Ausrichtung in Bezug auf die Längsachse des zu bildenden Faserhalbzeugs aufgebracht,
c) auf die zweite Schicht aus Rovingen mit 0°-Ausrichtung werden oder sind Kurzfasern mit einer vorbestimmten Faserlänge als dritte Schicht verteilt und
d) auf die dritte Schicht aus Kurzfasern werden Rovinge mit einer 0°-Ausrichtung in Bezug auf die Längsachse des zu bildenden Faserhalbzeugs als vierte Schicht aufgebracht,
e) wobei in einem nachfolgenden Schritt die zusammengestellten Schichten miteinander zu einem Faserhalbzeug, insbesondere durch Nähen, verbunden werden.

Die Erfindung beruht dabei auf dem Gedanken, dass ein Rotorblattgurt, z.B. ein Hauptgurt eines Rotorblatts, oder ein aus Laminaten oder Laminatschichten bestehendes Bauteil einer Windenergieanlage mit dicken bzw. sehr dicken Unidirektional-Gelegen (UD-Gelegen) aufgebaut bzw. hergestellt wird.

Hierbei werden Faserhalbzeuge für das faserverstärkte Bauteil (z. B. Rotorblattgurt) jeweils aus mindestens vier Schichten hergestellt, wobei die Faserschichten bzw. der Herstellung des faserverstärkten Bauteils entsprechend miteinander verklebt sind oder werden. Hierbei ist bei den Halbzeugen zwischen den mindestens zwei Schichten mit Rovingen in 0°-Ausrichtung jeweils eine Kurzfaserschicht ausgebildet, wobei die Kurzfasern beispielsweise eine maximale Faserlänge von 10 cm, insbesondere von 5 cm, und weniger aufweisen.

Unter einem Faserhalbzeug oder Halbzeug wird im Folgenden ein Faserverbund aus mehreren Faserschichten verstanden, wobei das Halbzeug als Zwischenprodukt noch nicht die Form des Bauteils aufweist und somit noch nicht einem (nachfolgenden) Weiterverarbeitungsprozess oder Formgebungsprozess zugeführt wurde. Im Rahmen der Erfindung werden langgestreckte oder längliche Halbzeuge hergestellt, wobei die Längsachse des Halbzeugs in 0°-Ausrichtung verläuft.

Typischerweise haben die hergestellten Halbzeuge eine (Schich ten-)Gesamtdicke zwischen 1,0 mm bis 2,5 mm, vorzugsweise zwischen 1,2 mm und 1,6mm.

Es ist im Rahmen der Erfindung vorgesehen, dass das langgestreckte Faserhalbzeug mehr als zwei Schichten mit aus Rovingen mit jeweils einer 0°-Ausrichtung in Bezug auf die (Längs-)Achse des Halbzeugs aufweist. Sind mehr als zwei Schichten aus Rovingen mit jeweils einer 0°-Ausrichtung vorgesehen, so ist jeweils zwischen zwei Schichten aus Rovingen mit 0°-Ausrichtung eine entsprechende Schicht aus Kurzfasern ausgebildet.

Um eine vereinfachte Handhabung des mehrschichtigen Geleges zu erreichen, sind oder werden die mindestens vier (trockenen d.h. noch nicht vom Harz zu tränkenden) Schichten miteinander verbunden, z.B. vernäht. Dabei ist es möglich, dass durch Nähen oder Verkleben oder Klammern die Schichten zu einem Halbzeug hergestellt werden. Mehrere als Zwischenprodukte bereitgestellte Halbzeuge werden in einem nachfolgenden Weiterverarbeitungsprozess zu einem faserverstärkten Bauteil, z.B. Rotorblattgurt, miteinander verbunden.

Im Rahmen der Erfindung bestehen Rovinge jeweils aus gebündelten Fasereinzelfilamenten, wobei gemäß der erfindungsgemäßen Anordnung der Rovinge und der Kurzfasern ein dickes Fasergelege, insbesondere für ein faserverstärktes Bauteil, insbesondere einen Rotorblattgurt, ausgebildet ist oder wird. Insbesondere sind bei den Rovingen endlose Einzelfäden parallel zueinander im Bündel angeordnet.

Die bereitgestellte Grundschicht weist im Rahmen der Erfindung als alternative Ausgestaltung des Verfahrens mindestens ein Faservlies auf, auf dem die Schichten aus Rovingen mit 0°-Richtung und die Kurzfaserschicht(en) angeordnet werden. Die aufeinander gestapelten Schichten des Halbzeugs werden oder sind, z.B. durch Nähen, miteinander verbunden.

Die für die Herstellung der Bauteile verwendeten Harze oder Klebermassen sind insbesondere Kunstharze oder Reaktionsharze, die durch Polymerisations-, Polyaddition- oder Polykondensationsreaktionen synthetisch hergestellt sind. Die vorzugsweise verwendeten Kunstharze bestehen in der Regel aus zwei Hauptkomponenten, nämlich einem Harz und einem Härter, die zusammen eine reaktionsfähige Harzmasse bzw. ein reaktionsfähiges Harz ergeben.

Durch Härtung steigt die Viskosität an und nach abgeschlossener Härtung wird ein entsprechender Verbund des Harzes mit den Fasern in den Einzellagen und den zusammengestellten Schichten erreicht, wodurch die mehreren Einzellagen aus Rovingen untereinander und die Einzellagen mit den Kurzfasern verbunden sind. Dabei sind auch die zwischen den Rovingen mit 0°-Ausrichtung vorgesehenen Schichten aus Kurzfasern mit den Rovingen verbunden. Im Rahmen der Erfindung umfasst der Begriff "Harz" auch ein Harz mit einem Härter.

Bei der Fertigung eines faserverstärkten Bauteils bzw. eines Rotorblattgurts kann eine Spritz-Press-Technik (Resin Transfer Moulding; RTM), eine Infusionstechnik (Resin Infusion Moulding; RIM) verwendet werden, insbesondere eine durch Vakuum unterstützte Infusionstechnik (Vacuum Assisted Resin Infusion; VARI) und/oder eine Laminiertechnik verwendet werden, beispielsweise mit sogenannten Prepregs.

Im Rahmen der Erfindung ist ein Rotorblattgurt bzw. ein Hauptgurt als faserverstärktes Bauteil einer Windenergieanlage ein wesentliches tragendes Element eines Rotorblatts, das ausgebildet ist, Umschlagkräfte, Drehmomente und/oder Biegekräfte aufzunehmen.

Bei einem Gurt handelt es sich insbesondere um ein glasfaserverstärktes Kunststoffgelege, das mit mehreren Lagen aus Fasern, z.B. Glasfasern und/oder Basaltfasern und/oder Kohlefasern, zu einer entsprechenden Stabilität in Verbindung mit einem Harz, insbesondere Polyesterharz oder einem Epoxidharz oder einem anderen Harz, führt.

Im Rahmen der Erfindung ist es vorstellbar, dass die verschiedenen Schichten des Faserhalbzeugs aus verschiedenen Faserarten gebildet sind, so dass das mehrschichtige Halbzeug aus unterschiedlichen Fasern gebildet ist oder wird. Dabei sind neben Glasfasern, Basaltfasern und Kohlefasern auch weitere Fasertypen denkbar.

Die Dicke des Gurtes hängt von der Rotorblattlänge und den für den Standpunkt einer Windenergieanlage ermittelten Belastungsparametern ab. Die maximale Dicke des Gurts kann somit im Bereich von 2 cm bis 10 cm liegen. Entsprechend kann eine Breite eines Rotorblattgurts im Bereich von 25 cm bis 100 cm, insbesondere zwischen 50 cm bis 100 cm, oder noch breiter vorgesehen sein.

Im Rahmen der Erfindung werden dicke oder sehr dicke Laminate mit dicken Fasergelegen mit einer hohen Faserdichte bzw. einem Flächengewicht von mindestens 1 kg/m² und mehr hergestellt. Die Dicke der hergestellten Laminate, z.B. Rotorblattgurt oder ein faserverstärktes Bauteil sowie faserverstärkter Abschnitt eines Rotorblatts variiert über die Länge des Rotorblatts und kann bis zum Maximum zwischen 2 cm bis 10 cm betragen.

Um ein faserverstärktes Bauteil einer Windenergieanlage, z.B. Rotorblattgurt herzustellen, werden nach der Anordnung von mehreren Halbzeugen mit mindestens vier Faserschichten übereinander die Fasern der übereinander angeordneten Schichten mit Harz getränkt, so dass nach einem Aushärten des Harzes das Bauteil bzw. der Rotorblattgurt verwendet werden kann.

Dazu ist weiter vorgesehen, dass die Rovinge der Grundschicht (als erste Schicht) eine Ausrichtung in Bezug auf die Längsachse des zu bildenden Faserhalbzeugs zwischen + 60° und - 60°, vorzugsweise zwischen + 45° und - 45°, aufweisen.

Gemäß einer bevorzugten Ausgestaltung weisen die Rovinge der Grundschicht eine Ausrichtung in Bezug auf die Längsachse des zu bildenden Faserhalbzeugs von 90° auf.

Außerdem wird gemäß einer Weiterbildung vorgeschlagen, dass die Grundschicht aus mehreren Lagen mit Rovingen gebildet ist, wobei keine der Lagen eine 0°-Ausrichtung in Bezug auf die Längsachse des zu bildenden Faserhalbzeugs aufweist. Die als erste Schicht für das Halbzeug vorgesehene Grundschicht umfasst dabei mehrere Lagen aus Fasern, die zusammen die Grundschicht bilden, auf der die Schichten mit den Rovingen mit 0°-Richtung und die Kurzfaserschichten angeordnet sind.

Dazu ist in einer Weiterbildung vorgesehen, dass auf die vierte Schicht mit Rovingen in 0°-Richtung zusätzlich im Wechsel eine oder mehrere (weitere) Schicht(en) aus Kurzfasern mit einer vorbestimmten Faserlänge (≤ 100 mm oder ≤ 50 mm) und eine oder mehrere (weitere) Schicht(en) aus Rovingen mit einer 0°-Ausrichtung aufgebracht sind oder werden.

Für die Herstellung eines faserverstärkten Bauteils ist vorgesehen, dass die zusammengestellten Halbzeuge für das Bauteil, insbesondere Rotorblattgurt, unter Verwendung eines Harzkunststoffs bzw. eines Harzes miteinander verbunden werden oder sind. Nach Aushärtung des Harzes ist ein faserverstärktes Bauteil mit mehreren Laminatschichten, z.B. ein Rotorblatt oder ein anderes faserverstärktes Bauteil eines Rotorblatts, hergestellt.

Hierbei ist es überdies bei der Ausführung des Verfahrens bevorzugt, dass die Verfahrensschritte c) und d) mehrmals wiederholt werden, bis ein vorbestimmtes Flächengewicht, insbesondere von mindestens 0,5 kg/m² oder mindestens 1,0 kg/m², des Faserhalbzeugs erreicht ist. Das maximale Flächengewicht des Faserhalbzeugs beträgt bis zu 1,5 kg/m².

Vorzugsweise sind die aus Rovingen mit 0°-Ausrichtung gebildeten Schichten aus Glasfasern und/oder Basaltfasern und/oder Kohlefasern gebildet. Im Rahmen der Erfindung kann auch vorgesehen sein, andere Fasern für die Herstellung des Bauteils z.B. Kohlefasern zu verwenden

Überdies wird gemäß einer weiteren Ausgestaltung des Verfahrens vorgeschlagen, dass die erste Schicht aus Rovingen mit 0°-Ausrichtung einen Anteil zwischen 1 % bis 15 %, insbesondere zwischen 5 % bis 10 %, des Gesamtgewichts des aus dem, vorzugsweise trockenen, faserverstärkten Material hergestellten Faserhalbzeugs aufweist und/oder dass der Anteil der aus Kurzfasern gebildeten Schicht jeweils zwischen 0,5 % bis 7,5 %, vorzugsweise zwischen 3 % bis 5 %, des Gesamtgewichts des aus dem trockenen bzw. nicht verklebten faserverstärkten Material hergestellten Faserhalbzeugs, insbesondere des Fasergeleges, aufweist.

Hierdurch besitzt die erste Schicht aus Rovingen in 90°-Richtung beispielsweise 5% bis 10% des Gesamtgewichts des Geleges, wobei die zweite Schicht mit Rovingen in 0°-Ausrichtung ca. 45% des Gesamtgewichts des Geleges aufweisen kann. Dabei ist im Rahmen der Erfindung vorgesehen, dass die zwischen den Schichten mit Rovingen in 0°-Ausrichtung jeweils vorgesehene Schicht mit Kurzfasern mit einer Faserlänge beispielsweise von maximal 50 mm ungefähr einen Gewichtsanteil von 3% bis 5% des Gesamtgewichts des kompletten Fasergeleges aufweist.

Dadurch, dass zwischen den Schichten mit Rovingen in 0°-Richtung Kurzfaserschichten angeordnet sind, werden beispielsweise für die Herstellung des Bauteils unter Verwendung der Resin-Infusion-Moulding-Technik (RIM) Kanäle zwischen den Schichten mit den Rovingen in 0°-Richtung ausgebildet, wodurch beim Applizieren des Harzes die Rovinge in 0°-Richtung aufgrund der ausgebildeten Kanäle komplett umspült werden, wodurch sich ein besonders stabiles Bauteil bzw. ein besonders stabiles Rotorblatt infolge der guten Verteilung des Harzes ergibt.

Ferner wird durch die vorgesehene Kurzfaserschicht zwischen zwei angrenzenden Schichten aus Rovingen mit 0°-Richtung erreicht, dass die Rovinge in 0°-Richtung von zwei benachbarten Schichten in Folge der dazwischen vorgesehenen Kurzfaserschicht sich bei Ausbildung eines Rotorblattgurts nicht klumpenartig mit zu großen Durchmessern bündeln oder verbinden.

Des Weiteren ist in einer Ausgestaltung des Verfahrens vorgesehen, dass der Anteil der Rovinge mit 0°-Ausrichtung insgesamt zwischen 70 % bis 95 %, insbesondere zwischen 85 % und 92 %, des Gesamtgewichts des Faserhalbzeugs oder gesamten Fasergeleges beträgt. Dabei ist es in einer Ausgestaltung vorgesehen, dass die Schichten mit Rovingen mit 0°-Ausrichtung unterschiedlich schwer und/oder dick sind. Auch ist es denkbar, dass bei Fertigung des Halbzeugs die Schichten mit Rovingen mit 0°-Ausrichtung das gleiche Gewicht haben.

Gelöst wird die Aufgabe ferner durch ein Faserhalbzeug für die Herstellung eines faserverstärkten Bauteils einer Windenergieanlage, insbesondere Gurt eines Rotorblatts einer Windenergieanlage, wobei das Faserhalbzeug eine Grundschicht mit Rovingen, wobei die Rovinge der Grundschicht keine 0°-Ausrichtung in Bezug auf die Längsachse des Faserhalbzeugs aufweisen, aufweist oder wobei das Faserhalbzeug eine als Faservlies ausgebildete Grundschicht aufweist und eine zweite Schicht mit Rovingen mit einer 0°-Ausrichtung in Bezug auf die Längsachse des Faserhalbzeugs auf der Grundschicht aufweist, wobei wenigstens eine weitere Schicht mit Rovingen mit einer 0°-Ausrichtung ausgebildet ist, wobei zwischen zwei Schichten mit Rovingen mit einer 0°-Ausrichtung in Bezug auf die Längsachse des Faserhalbzeugs eine Schicht aus Kurzfasern mit einer vorbestimmten Länge, vorzugsweise ≤ 100 mm oder ≤ 50 mm, ausgebildet ist, wobei die Schichten des Faserhalbzeugs miteinander verbunden, insbesondere vernäht, sind. Im Rahmen der Erfindung werden unter Kurzfasern Fasern mit einer maximalen Länge zwischen 10 bis 100 mm verstanden.

Darüber hinaus zeichnet sich das Faserhalbzeug dadurch aus, dass auf der zweiten Schicht mit Rovingen mit 0°-Ausrichtung alternierend jeweils mindestens eine Schicht aus Kurzfasern mit einer vorbestimmten Faserlänge und mindestens eine Schicht mit Rovingen mit einer 0°-Ausrichtung ausgebildet oder angeordnet sind.

Insbesondere weisen die Rovinge der Grundschicht (als erste Schicht) eine Ausrichtung in Bezug auf die Längsachse des Faserhalbzeugs zwischen + 60° und - 60°, vorzugsweise zwischen + 45° und - 45°, - unter Ausschluss der 0°-Ausrichtung - auf. Durch die Ausnahme von Rovingen mit einer 0°-Ausrichtung in Bezug auf die Längsachse des Faserhalbzeugs für die Grundschicht, sind in der Grundschicht Rovinge mit einer Ausrichtung von ungleich 0° in Bezug auf die Längsachse des Halbzeugs vorhanden.

In einer bevorzugten Ausgestaltung weisen die Rovinge der Grundschicht eine Ausrichtung in Bezug auf die Längsachse des Faserhalbzeugs von 90° auf.

Außerdem wird gemäß einer Weiterbildung vorgeschlagen, dass die Grundschicht aus mehreren Lagen mit Rovingen gebildet ist, wobei keine der Lagen der Grundschicht eine 0°-Ausrichtung in Bezug auf die Längsachse des Faserhalbzeugs aufweist. Jede der Lagen hat dabei eine Ausrichtung von ungleich 0° in Bezug auf die Längsachse des Halbzeugs. Die als erste Schicht vorgesehene Grundschicht umfasst dabei in einer Weiterbildung mehrere Lagen aus Fasern, die zusammen die Grundschicht bilden, auf der die Schichten mit den Rovingen mit 0°-Richtung und die Kurzfaserschichten abwechselnd angeordnet sind.

Überdies ist das Faserhalbzeug erhältlich durch Ausführen des voranstehend beschriebenen Verfahrens, wobei zur Vermeidung von Wiederholungen auf die obigen Ausführungen ausdrücklich verwiesen wird.

Außerdem wird die Aufgabe gelöst durch eine Verwendung von mindestens einem Faserhalbzeug für die Herstellung eines faserverstärkten Bauteils einer Windenergieanlage, insbesondere Gurt eines Rotorblatts einer Windenergieanlage, wobei das Faserhalbzeug wie voranstehend beschrieben ausgebildet oder bereitgestellt ist. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: im Ausschnitt schematisch einen Querschnitt durch ein Fasergelege eines Faserhalbzeugs einer Windenergieanlage;
- Fig. 2a: schematisch eine perspektivische Ansicht einer Rotorblatthälfte und
- Fig. 2b: einen schematischen Querschnitt durch einen Rotorblattgurt des Rotorblatts.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

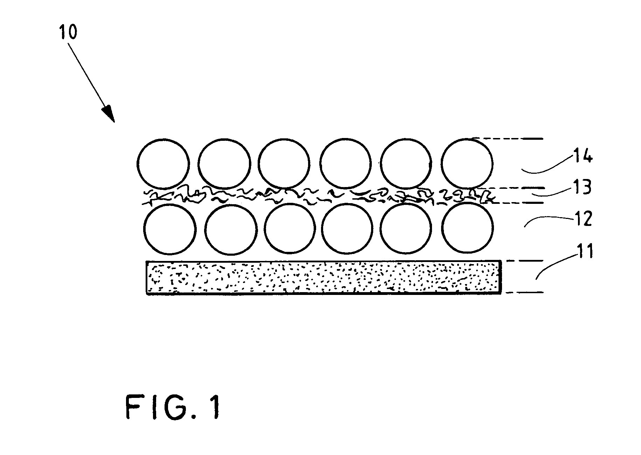

Fig. 1 zeigt in einer schematischen Querschnittsansicht ein mehrschichtiges Fasergelege eines Faserhalbzeugs 10 einer Windenergieanlage, das aus mehreren Faserschichten gebildet ist. Das Faserhalbzeug 10 verfügt über eine erste Schicht 11, die aus Rovingen in 90°-Richtung besteht. Hierbei sind die Rovinge der Schicht 11 beispielsweise aus Glasfasern gebildet. Auf der äußeren als Grundschicht vorgesehenen ersten Schicht 11 ist als zweite Schicht 12 aus Rovingen mit 0°-Richtung angeordnet, wobei auf der zweiten Schicht 12 eine Schicht 13 aus Kurzfasern mit einer Faserlänge von ≤ 50 mm (kleiner/gleich 50 mm), vorzugsweise ≤ 30 mm, aufgestreut bzw. ausgebildet ist, wobei die Kurzfasern über die gesamte Fläche der zweiten Schicht gleichmäßig verteilt ist.

Oberhalb der Kurzfaserschicht 13 ist eine vierte Schicht 14 mit Rovingen in 0°-Richtung angeordnet, so dass zwischen der zweiten Schicht 12 und der vierten Schicht 14 die Kurzfaserschicht 13 angeordnet ist. In weiteren erfindungsgemäßen Ausbildungen sind oberhalb der vierten Schicht 14 weitere Kurzfaserschichten und Schichten mit Rovingen in 0°-Ausrichtung alternierend angeordnet.

In einer alternativen (hier nicht dargestellten) Ausgestaltung ist die erste Schicht 11 als ein Faservlies ausgebildet, auf der die weiteren Schichten 12, 13, 14 angeordnet werden oder sind.

Durch die Kurzfaserschicht bzw. -schichten 13 werden die jeweils aus Rovingen in 0°-Richtung bestehenden Schichten 12, 14 voneinander beabstandet, so dass beim Einbringen von Harz in die einzelnen Schichten 11, 12, 13, 14 die Schichten 12, 14 mit den Rovingen in 0°-Richtung nicht miteinander zu großen Verbünden verbunden werden. Vielmehr wird durch die Kurzfaserschicht(en) 13 erreicht, dass die Rovinge jeder Schicht in 0°-Richtung gut bzw. optimal von dem Harz umspült und durchtränkt werden.

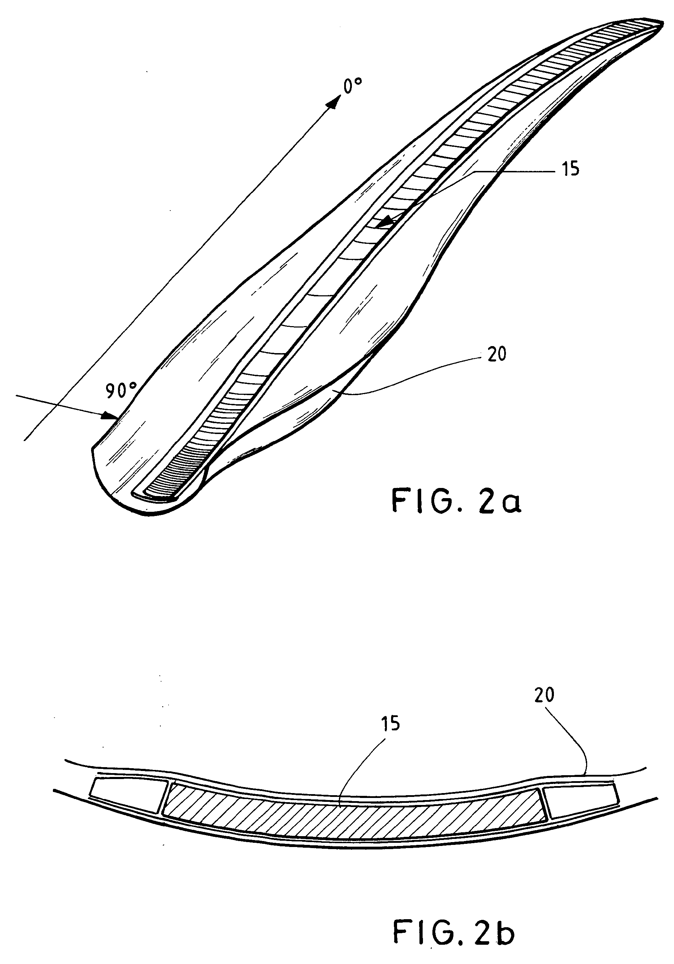

In Fig. 2a ist in einer schematischen perspektivischen Ansicht eine Hälfte eines Rotorblatts 20 dargestellt. Auf der Innenseite des Rotorblatts 20 ist ein Rotorblattgurt 15 in Längsrichtung des Rotorblatts 20 angeordnet. In Fig. 2b ist schematisch ein Querschnitt durch den Rotorblattgurt 15 gezeigt.

Um den Rotorblattgurt 15 anzufertigen, werden mehrere Faserhalbzeuge 10 übereinander in eine entsprechende Rotorblattgurtform gelegt und unter Anwendung beispielsweise der Resin-Infusion-Moulding-Technik (RIM) mit Harz durchtränkt, so dass nach Aushärtung des Harzes der Rotorblattgurt 15 aus der Form oder Schale für die Fertigung des Rotorblatts 20 entnommen wird. In Fig. 2a sind außerdem die 0°-Achse und die 90°-Achse der den Rotorblattgurt 15 bildenden Faserhalbzeuge 10 eingezeichnet. Die Rotorblattlängsachse verläuft dabei in Längsrichtung der Faserhalbzeuge und somit in Richtung von Rovingen mit einer 0°-Ausrichtung.

Nach Aushärtung des eingebrachten Harzes ist als faserverstärktes Bauteil aus mindestens einem oder mehreren Faserhalbzeugen 10 ein Rotorblattgurt 15 hergestellt, der anschließend für die Fertigung eines Rotorblatts bereitgestellt wird. Vorzugsweise wird der Rotorblattgurt 15 unter Verwendung einer Anzahl von mehreren Faserhalbzeugen 10 hergestellt.

Dabei ist gemäß der Erfindung vorgesehen, dass die erste Schicht 11 mit Rovingen in 90°-Richtung einen Anteil von 5% bis 10% des Gesamtgewichts des gesamten Fasergeleges aufweist. Die Kurzfaserschicht 13 weist gemäß der Erfindung ein Gewicht von 3% bis 5% des Gesamtgewichts des Fasergeleges entsprechend auf. Die weiteren Schichten 12 und 14 mit Rovingen in 0°-Richtung weisen dabei mehrheitlich oder überwiegend den Hauptanteil des Gesamtgewichts des Fasergeleges auf. Beispielsweise weisen die beiden Schichten 12 und 14 mit den Rovingen in 0°-Richtung einen Anteil von bis zu 45% des Gesamtgewichts des gesamten Fasergeleges auf.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Faserhalbzeug
- 11: erste Schicht
- 12: zweite Schicht
- 13: dritte Schicht
- 14: vierte Schicht
- 15: Rotorblattgurt
- 20: Rotorblatt

## Patentansprüche

1. Verfahren zum Herstellen eines Faserhalbzeugs (10) für die Herstellung eines faserverstärkten Bauteils (15) einer Windenergieanlage, insbesondere eines Gurts (15) eines Rotorblatts (20) einer Windenergieanlage, mit den folgenden Schritten:
a) es wird eine Grundschicht (11) mit Rovingen bereitgestellt, wobei die Rovinge der Grundschicht (11) keine 0°-Ausrichtung in Bezug auf die Längsachse des zu bildenden Faserhalbzeugs (10) aufweisen, oder es wird eine als Faservlies ausgebildete Grundschicht (11) bereitgestellt,
b) auf die Grundschicht (11) werden Rovinge als zweite Schicht (12) mit einer 0°-Ausrichtung in Bezug auf die Längsachse des zu bildenden Faserhalbzeugs (10) aufgebracht,
c) auf die zweite Schicht (12) aus Rovingen mit 0°Ausrichtung werden oder sind Kurzfasern mit einer vorbestimmten Faserlänge als dritte Schicht (13) verteilt und
d) auf die dritte Schicht (13) aus Kurzfasern werden Rovinge mit einer 0°-Ausrichtung in Bezug auf die Längsachse des zu bildenden Faserhalbzeugs (10) als vierte Schicht (14) aufgebracht,
e) wobei in einem nachfolgenden Schritt die zusammengestellten Schichten (11, 12, 13, 14) miteinander zu einem Faserhalbzeug (10), insbesondere durch Nähen, verbunden werden.

2. Verfahren nach Anspruch 1, **dadurch gekennzeichnet, dass** die Rovinge der Grundschicht (11) eine Ausrichtung in Bezug auf die Längsachse des zu bildenden Faserhalbzeugs (10) zwischen + 60° und - 60°, vorzugsweise zwischen + 45° und - 45°, aufweisen.

3. Verfahren nach Anspruch 1, **dadurch gekennzeichnet, dass** die Rovinge der Grundschicht (11) eine Ausrichtung in Bezug auf die Längsachse des zu bildenden Faserhalbzeugs (10) von 90° aufweisen.

4. Verfahren nach einem der Ansprüche 1 bis 3, **dadurch gekennzeichnet, dass** die Grundschicht (11) aus mehreren Lagen mit Rovingen gebildet ist, wobei keine der Lagen eine 0°-Ausrichtung in Bezug auf die Längsachse des zu bildenden Faserhalbzeugs (10) aufweist.

5. Verfahren nach einem der Ansprüche 1 bis 4, **dadurch gekennzeichnet, dass** auf die vierte Schicht (14) zusätzlich im Wechsel eine Schicht aus Kurzfasern (13) mit einer vorbestimmten Faserlänge und eine Schicht (12, 14) aus Rovingen mit einer 0°-Ausrichtung aufgebracht sind oder werden.

6. Verfahren nach einem der Ansprüche 1 bis 5, **dadurch gekennzeichnet, dass** die Verfahrensschritte c) und d) mehrmals wiederholt werden, bis ein vorbestimmtes Flächengewicht, insbesondere von mindestens 0,5 kg/m² oder mindestens 1,0 kg/m², des Faserhalbzeugs (10) erreicht ist.

7. Verfahren nach einem der Ansprüche 1 bis 6, **dadurch gekennzeichnet, dass** die Schichten (11, 12, 13, 14) aus Glasfasern und/oder Basaltfasern und/oder Kohlefasern gebildet sind.

8. Verfahren nach einem der Ansprüche 1 bis 7, **dadurch gekennzeichnet, dass** die erste Schicht (11) aus Rovingen mit 90°-Ausrichtung einen Anteil zwischen 1 % bis 15 %, insbesondere zwischen 5 % bis 10 %, des Gesamtgewichts des aus dem faserverstärkten Material hergestellten Faserhalbzeugs (10) aufweist und/oder der Anteil der aus Kurzfasern gebildeten Schicht (12) jeweils zwischen 0,5 % bis 7,5 %, vorzugsweise zwischen 3 % bis 5 %, des Gesamtgewichts des aus dem faserverstärkten Material hergestellten Faserhalbzeugs (10), insbesondere des Fasergeleges, aufweist.

9. Verfahren nach einem der Ansprüche 1 bis 8, **dadurch gekennzeichnet, dass** der Anteil der Rovinge mit 0°-Ausrichtung (12, 14) insgesamt zwischen 70 % bis 95 %, insbesondere zwischen 85 % und 92 %, des Gesamtgewichts des Faserhalbzeugs (10) beträgt.

10. Faserhalbzeug (10) für die Herstellung eines faserverstärkten Bauteils (15) einer Windenergieanlage, insbesondere Gurt (15) eines Rotorblatts (20) einer Windenergieanlage, wobei das Faserhalbzeug (10) eine Grundschicht (11) mit Rovingen, wobei die Rovinge der Grundschicht (11) keine 0°-Ausrichtung in Bezug auf die Längsachse des Faserhalbzeugs (10) aufweisen, aufweist oder wobei das Faserhalbzeug (10) eine als Faservlies ausgebildete Grundschicht (11) aufweist und eine zweite Schicht (12) mit Rovingen mit einer 0°-Ausrichtung in Bezug auf die Längsachse des Faserhalbzeugs (10) auf der Grundschicht (11) aufweist, wobei wenigstens eine weitere Schicht (14) mit Rovingen mit einer 0°-Ausrichtung ausgebildet ist, wobei zwischen zwei Schichten mit Rovingen (12, 14) mit einer 0°-Ausrichtung in Bezug auf die Längsachse des Faserhalbzeugs (10) eine Schicht (13) aus Kurzfasern mit einer vorbestimmten Länge ausgebildet ist, wobei die Schichten (11, 12, 13, 14) miteinander verbunden, insbesondere vernäht, sind.

11. Faserhalbzeug (10) nach Anspruch 10, **dadurch gekennzeichnet, dass** auf der zweiten Schicht (12) mit Rovingen mit 0°-Ausrichtung alternierend jeweils mindestens eine Schicht (13) aus Kurzfasern mit einer vorbestimmten Faserlänge und mindestens eine Schicht (14) mit Rovingen mit einer 0°-Ausrichtung ausgebildet oder angeordnet sind.

12. Faserhalbzeug (10) nach Anspruch 10 oder 11, **dadurch gekennzeichnet, dass** die Rovinge der Grundschicht (11) eine Ausrichtung in Bezug auf die Längsachse des Faserhalbzeugs (10) zwischen + 60° und - 60°, vorzugsweise zwischen + 45° und - 45°, aufweisen.

13. Faserhalbzeug (10) nach Anspruch 10 oder 11, **dadurch gekennzeichnet, dass** die Rovinge der Grundschicht (11) eine Ausrichtung in Bezug auf die Längsachse des Faserhalbzeugs (10) von 90° aufweisen und/oder dass die Grundschicht (11) aus mehreren Lagen mit Rovingen gebildet ist, wobei keine der Lagen eine 0°-Ausrichtung in Bezug auf die Längsachse des Faserhalbzeugs (10) aufweist.

14. Verwendung von mindestens einem Faserhalbzeug (10) für die Herstellung eines faserverstärkten Bauteils (15) einer Windenergieanlage, insbesondere Gurt (15) eines Rotorblatts (20) einer Windenergieanlage, wobei das Faserhalbzeug (10) nach einem der Ansprüche 10 bis 13 ausgebildet oder bereitgestellt ist.

## Claims

1. A method for producing a semi-finished fiber product (10) for producing a fiber-reinforced component (15) of a wind energy plant, in particular a belt (15) of a rotor blade (20) of a wind energy plant, comprising the following steps:
a) a base layer (11) with rovings is provided, wherein the rovings of the basic layer (11) do not have a 0° alignment with reference to the longitudinal axis of the semifinished fiber product (10) to be formed, or a base layer (11) formed as a fiber fleece is provided,
b) rovings are applied on the base layer (11) as a second layer (12) with a 0° alignment with reference to the longitudinal axis of the semifinished fiber product (10) to be formed,
c) short fibers with a predetermined fiber length will be or are distributed as a third layer (13) on the second layer (12) consisting of rovings with a 0° alignment, and
d) on the third layer (13) consisting of short fibers, rovings are applied as a fourth layer (14) with a 0° alignment with reference to the longitudinal axis of the semifinished fiber product (10) to be formed,
e) wherein in a following step, the compiled layers (11, 12, 13, 14) are joined together into a semifinished fiber product (10), in particular by sewing.

2. The method according to claim 1, **characterized in that** the rovings of the base layer (11) have an alignment with reference to the longitudinal axis of the semifinished fiber product (10) to be formed between +60° and -60°, preferably between +45° and -45°.

3. The method according to claim 1, **characterized in that** the rovings of the base layer (11) have an alignment with reference to the longitudinal axis of the semifinished fiber product (10) of 90°.

4. The method according to one of claims 1 to 3, **characterized in that** the base layer (11) is formed from a plurality of layers with rovings, whereby none of the layers has a 0° alignment with reference to the longitudinal axis of the semifinished fiber product (10) to be formed.

5. The method according to one of claims 1 to 4, **characterized in that** a layer consisting of short fibers (13) with a predetermined fiber length, and a layer (12, 14) consisting of rovings with a 0° alignment, are or will be also alternatingly applied to the fourth layer (14).

6. The method according to one of claims 1 to 5, **characterized in that** method steps c) and d) are repeated several times until a predetermined surface weight, in particular at least 0.5 kg/m² or at least 1.0 kg/m² of the semifinished fiber product (10), is reached.

7. The method according to one of claims 1 to 6, **characterized in that** the layers (11, 12, 13, 14) are formed from glass fibers and/or basalt fibers and/or carbon fibers.

8. The method according to one of claims 1 to 7, **characterized in that** the percentage of the first layer (11) consisting of rovings with a 90° alignment is between 1% to 15%, in particular between 5% to 10%, of the overall weight of the semifinished fiber product (10) produced from the fiber reinforced material, and/or the percentage of the layer (12) formed from short fibers comprises between 0.5% to 7.5%, preferably between 3% to 5%, of the overall weight of the semifinished fiber product (10), in particular the fiber layering, produced from the fiber reinforced material.

9. The method according to one of claims 1 to 8, **characterized in that** the overall percentage of rovings with a 0% alignment (12, 14) is between 70% to 95%, in particular between 85% to 92%, of the overall weight of the semifinished fiber product (10).

10. A semifinished fiber product (10) for producing a fiber-reinforced component (15) of a wind energy plant, in particular a belt (15) of a rotor blade (20) of a wind energy plant, wherein the semifinished fiber product (10) has a base layer (11) with rovings, wherein the rovings of the base layer (11) do not have a 0° alignment with reference to the longitudinal axis of the semifinished fiber product (10), or wherein the semifinished fiber product (10) has a base layer (11) formed as a fiber fleece and a second layer (12) with rovings having a 0° realignment with reference to the longitudinal axis of the semifinished fiber product (10) on the base layer (11), wherein at least one additional layer (14) with rovings with a 0° alignment is formed, wherein a layer (13) consisting of short fibers with a predetermined length is formed between two layers with rovings (12, 14) with a 0° alignment with reference to the longitudinal axis of the semi-finished fiber product (10), wherein the layers (11, 12, 13, 14) are connected to each other, in particular sewn.

11. The semifinished fiber product (10) according to claim 10, **characterized in that** at least one layer (13) consisting of short fibers with a predetermined fiber length and at least one layer (14) with rovings with a 0° alignment are alternatingly formed or arranged on the second layer (12) with rovings having a 0° alignment.

12. The semifinished fiber product (10) according to claim 10 or 11, **characterized in that** the rovings of the base layer (11) have an alignment with reference to the longitudinal axis of the semifinished fiber product (10) between +60° and -60°, preferably between +45° and -45°.

13. The semifinished fiber product (10) according to claim 10 or 11, **characterized in that** the rovings of the base layer (11) have an alignment with reference to the longitudinal axis of the semifinished fiber product (10) of 90°, and/or the base layer (11) is formed from a plurality of layers with rovings, wherein none of the layers have a 0° alignment with reference to the longitudinal axis of the semifinished fiber product (10).

14. A use of at least one semifinished fiber product (10) for producing a fiber reinforced component (15) of a wind energy plant, in particular a belt (15) of a rotor blade (20) of a wind energy plant, wherein the semifinished fiber product (10) is formed or provided according to one of claims 10 to 13.

## Revendications

1. Procédé de fabrication d'un produit fibreux semi-fini (10) pour produire un composant (15) renforcé par des fibres d'une éolienne, en particulier une bande (15) d'une pale de rotor (20) d'une éolienne, comprenant les étapes suivantes :
a) prévoir une couche de base (11) pourvue de stratifils, les faisceaux de fibres de la couche de base (11) n'ayant pas une orientation à 0° par rapport à l'axe longitudinal du produit fibreux semi-fini (10) destiné à être formé, ou prévoir une couche de base (11) sous la forme d'un non tissé,
b) des stratifils sont appliqués sur la couche de base (11) en tant que deuxième couche (12) avec une orientation à 0° par rapport à l'axe longitudinal du produit fibreux semi-fini (10) destiné à être formé,
c) sur la deuxième couche (12) en stratifils ayant une orientation à 0°, des fibres courtes ayant une longueur de fibre prédéterminée sont distribuées ou sont aptes à être distribuées en tant que troisième couche (13)
d) sur la troisième couche (13) de fibres courtes, des stratifils avec une orientation à 0° par rapport à l'axe longitudinal du produit fibreux semi-fini (10) destiné à être formé sont appliqués en tant que quatrième couche (14),
e) dans lequel, dans une étape ultérieure, les couches assemblées (11, 12, 13, 14) sont reliées les unes aux autres pour former un produit fibreux semi-fini (10), notamment par couture.

2. Procédé selon la revendication 1, **caractérisé en ce que** les stratifils de la couche de base (11) ont, par rapport à l'axe longitudinal du produit fibreux semi-fini (10) destiné à être formé, une orientation comprise entre +60° et -60°, de préférence comprise entre +45° et -45°.

3. Procédé selon la revendication 1, **caractérisé en ce que** les stratifils de la couche de base (11) présentent une orientation par rapport à l'axe longitudinal pour former le produit fibreux semi-fini (10) de 90°.

4. Procédé selon l'une quelconque des revendications 1 à 3, **caractérisé en ce que** la couche de base (11) est formée de plusieurs couches de stratifils, dans lequel aucune des couches n'a une orientation à 0° par rapport à l'axe longitudinal du produit fibreux semi-fini (10) destiné à être formé.

5. Procédé selon l'une quelconque des revendications 1 à 4, **caractérisé en ce que**, sur la quatrième couche (14), sont en plus appliquées alternativement, ou sont aptes à être appliquées, une couche de fibres courtes (13) ayant une longueur de fibre prédéterminée et une couche (12, 14) de stratifils avec une orientation à 0°.

6. Procédé selon l'une quelconque des revendications 1 à 5, **caractérisé en ce que** les étapes de procédé c) et d) sont répétées plusieurs fois jusqu'à ce que soit atteint un poids prédéterminé du produit fibreux semi-fini (10) par unité de surface, en particulier d'au moins 0,5 kg / m² ou d'au moins 1,0 kg / m².

7. Procédé selon l'une quelconque des revendications 1 à 6, **caractérisé en ce que** les couches (11, 12, 13, 14) sont formées de fibres de verre et / ou de fibres de basalte, de fibres de verre et / ou des fibres de carbone.

8. Procédé selon l'une quelconque des revendications 1 à 7, **caractérisé en ce que** la première couche (11) de stratifils ayant une orientation à 90° comprend une proportion comprise entre 1% et 15%, en particulier entre 5% et 10% du poids total du produit fibreux semi-fini (10) fabriqué en fibre renforcée et / ou une proportion des fibres courtes formant la deuxième couche (12) comprise entre 0,5% et 7,5%, de préférence entre 3% et 5%, du poids total du produit fibreux semi-fini fabriqué à partir du matériau renforcé par des fibres (10), en particulier du stratifié de fibres.

9. Procédé selon l'une des revendications 1 à 8, **caractérisé en ce que** la proportion des stratifils (12, 14) ayant une orientation à 0°, représente un total compris entre 70% et 95%, en particulier entre 85% et 92%, du poids total du produit fibreux semi-fini (10).

10. Produit fibreux semi-fini (10) pour produire un composant (15) renforcé par des fibres d'une éolienne, notamment la bande (15) d'une pale de rotor (20) d'une éolienne, dans lequel le produit fibreux semi-fini (10) comprend une couche de base (11) avec des stratifils, dans lequel les stratifils de la couche de base (11) n'ont pas une orientation à 0° par rapport à l'axe longitudinal du produit fibreux semi-fini (10), ou dans lequel le produit fibreux semi-fini (10) comprend une couche de base (11) en non tissé, et une deuxième couche (12) en stratifils avec une orientation à 0° par rapport à l'axe longitudinal du produit fibreux semi-fini (10), sur la couche de base (11), dans lequel au moins une autre couche (14) est formée avec des stratifils ayant une orientation à 0°, dans lequel est aménagée, entre deux couches de stratifils (12, 14) ayant une orientation à 0° par rapport à l'axe longitudinal du produit fibreux semi-fini (10), une couche (13) formée de fibres courtes ayant une longueur prédéterminée, les couches (11, 12, 13, 14) étant reliées les uns aux autres, et en particulier cousues.

11. Produit fibreux semi-fini (10) selon la revendication 10, **caractérisé en ce que**, sur la deuxième couche (12) de stratifils ayant une orientation à 0°, sont formées ou placées, avec une orientation à 0°, en alternance dans chaque cas, au moins une couche (13) de fibres courtes ayant une longueur de fibre prédéterminée et au moins une couche (14) de stratifils.

12. Produit fibreux semi-fini (10) selon la revendication 10 ou la revendication 11, **caractérisé en ce que** les stratifils de la couche de base (11) ont une orientation par rapport à l'axe longitudinal du produit fibreux semi-fini (10) comprise entre +60° et -60°, de préférence entre +45° et -45°.

13. Produit fibreux semi-fini (10) selon la revendication 10 ou la revendication 11, **caractérisé en ce que** les stratifils de la couche de base (11) présentent une orientation par rapport à l'axe longitudinal du produit fibreux semi-fini (10) de 90° et / ou **en ce que** la couche de base (11) est composée de plusieurs des couches formées par des stratifils, aucune des couches n'ayant une orientation à 0° par rapport à l'axe longitudinal du produit fibreux semi-fini (10).

14. Utilisation d'au moins un produit fibreux semi-fini (10) pour produire un composant (15) renforcé par des fibres d'une éolienne, en particulier une bande (15) d'une pale de rotor (20) d'une éolienne, dans lequel le produit fibreux semi-fini (10) est formé ou est réalisé selon l'une quelconque des revendications 10 à 13.
